# NEW EUROPEAN PATENT SPECIFICATION

(11) **EP 1 545 253 B2**
(45) Date of publication and mention of the opposition decision: **14.01.2015**
(45) Mention of the grant of the patent: 11.08.2010
(21) Application number: 03769286.0
(22) Date of filing: 18.09.2003
(51) Int. Cl.: A43B 7/12, A43B 13/16

(54) **WATERPROOF AND BREATHABLE SOLE FOR SHOES, AND SHOE MANUFACTURED WITH SUCH SOLE**
WASSERDICHTE UND ATMUNGSAKTIVE SOHLE FÜR SCHUHE UND MIT EINER SOLCHEN SOHLE HERGESTELLTER SCHUH
SEMELLE IMPERMEABLE A L'EAU ET RESPIRANT POUR SOULIERS ET SOULIER EQUIPE DE CETTE SEMELLE

(30) Priority: 24.09.2002 IT PD20020246
(43) Date of publication of application: 29.06.2005
(60) Divisional application: 10164315.3
(73) Proprietor: Geox S.p.A., 31044 Montebelluna Località Biadene (Treviso) (IT)
(72) Inventor: POLEGATO MORETTI, Mario, I-31035 Crocetta del Montello (IT)
(74) Representative: Modiano, Micaela Nadia
(86) International application number: PCT/EP2003/010395
(87) International publication number: WO 2004/028284

(56) References cited:
- EP-A- 0 713 658
- WO-A-02/32246
- WO-A-97/14326
- WO-A-98/51177
- US-A1- 2001 003 875

## Description

### Technical Field

The present invention relates to an improved waterproof and breathable sole for shoes and to the shoe manufactured with such sole.

### Background Art

Waterproof and breathable soles made of plastics for shoes are already known.

One of such soles is disclosed in WO 97/14326.

In this case, the sole comprises:
-- a mid-sole with a membrane made of a material that is impermeable to water and permeable to water vapor, associated with a lower protective layer of a material that is resistant to hydrolysis, water-repellent, breathable and/or perforated;
-- a tread made of perforated elastomer, which is joined perimetrically and hermetically to the mid-sole.

The waterproof and breathable sole disclosed in WO 98/51177 is also known; it comprises a preassembled insert in which there is a membrane that is impermeable to water and permeable to water vapor, associated with a lower protective layer made of a material that is resistant to hydrolysis, water-repellent, breathable and/or perforated.

The insert is completed by an element that is overmolded or over-assembled, surrounds the membrane and the protective layer, and is joined hermetically to them.

The insert is part of a mid-sole and is joined, together with said mid-sole, to a tread made of perforated plastic material, which is overmolded or over-assembled.

In both cases, the protective layer arranged below the membrane is designed to protect it against piercing due to foreign objects that have accidentally passed through the holes.

The protective layer is usually made of felt and is coupled to the membrane in a breathable manner (by means of spots of thermoplastic adhesive, for example of the polyurethane-based type) to allow the passage of the vapor from the inside of the shoe toward the outside through the holes provided in the tread.

Breathable and waterproof soles for shoes are also known from USSN 09/978,634 and EPA No. 01124210.4 and comprise, at least along part of their extension, a lower waterproof component that constitutes the tread, an upper component with a supporting structure that is provided with holes connected to outlets at least on the upper and edge surfaces, and a waterproof vapor-permeable membrane that surrounds externally at least the outward-facing regions of the upper component.

The lower component, the upper component and the membrane are joined hermetically in the regions of possible internal water infiltration.

WO 02/32246 discloses a mid-sole for waterproof breathable soles for shoes, that comprises a waterproof and breathable membrane to which is coupled peripherically and monolithically a lower layer made of breathable elongation-preventing composite material, for avoiding excessive elongation of the waterproof and breathable membrane.

Although the above described soles have now been available commercially for years and are unanimously acknowledged as being capable of producing an exchange of heat and water vapor between the microclimate inside the shoe and the external microclimate, such soles, in some cases, such as for example use on the part of users with quantitatively higher-than-average foot perspiration, have been found to have a breathability that is insufficient to fully dispose of the generated vapor and ensure the correct microclimate inside the shoe.

The structure of the above described soles in fact has, at least in a downward region, layers of microperforated plastic material, i.e., provided with holes having a diameter on the order of 1-2 millimeters, and the total area of the microperforations in any case limits the area of the membrane that is actually affected by the exchange of heat and vapor.

### Disclosure of the Invention

The aim of the present invention is to provide a waterproof and breathable sole for shoes, and the corresponding shoe, having an improved structure that is capable of utilizing to the maximum extent the breathability of the membrane that is impermeable to water and permeable to water vapor.

Within this aim, an object of the invention is to provide a waterproof and breathable sole for shoes having a structure that allows to enlarge the area of the membrane until it affects substantially the entire sole of the foot.

Another object is to provide a sole that does not entail particular constructive complications with respect to conventional soles.

Another object is to provide a sole whose costs are competitive with respect to conventional types.

In accordance with the invention, there is provided a waterproof and breathable sole for shoes as defined in the appended claims.

### Brief description of the drawings

Further characteristics and advantages of the present invention will become better apparent from the detailed description of some embodiments thereof, illustrated by way of non-limitative example in the accompanying drawings, wherein:
Figure 1 is a longitudinal sectional view of a waterproof and breathable sole for shoes having the structure according to the invention, in a first embodiment;
Figure 2 is an enlarged-scale sectional view of a detail of the sole of Figure 1;
Figure 3 is an enlarged-scale sectional view of a detail of a variation of the sole of Figure 1;
Figure 4 is an exploded view of the components of the variation of Figure 3;
Figure 5 is a sectional view, taken along a longitudinal plane, of a waterproof and breathable sole for shoes having the structure according to the invention in a constructive variation;
Figure 6 is an exploded sectional view, taken along a longitudinal plane, of a waterproof and breathable sole for shoes having the structure which does not form part of the invention;
Figure 7 is a sectional view, taken along a longitudinal plane, of the sole of Figure 6 in the assembled condition;
Figure 8 is a bottom perspective view of a shoe provided with the sole of Figures 6 and 7;
Figure 9 is an enlarged-scale sectional view of a detail of Figure 7.

### Ways of carrying out the Invention

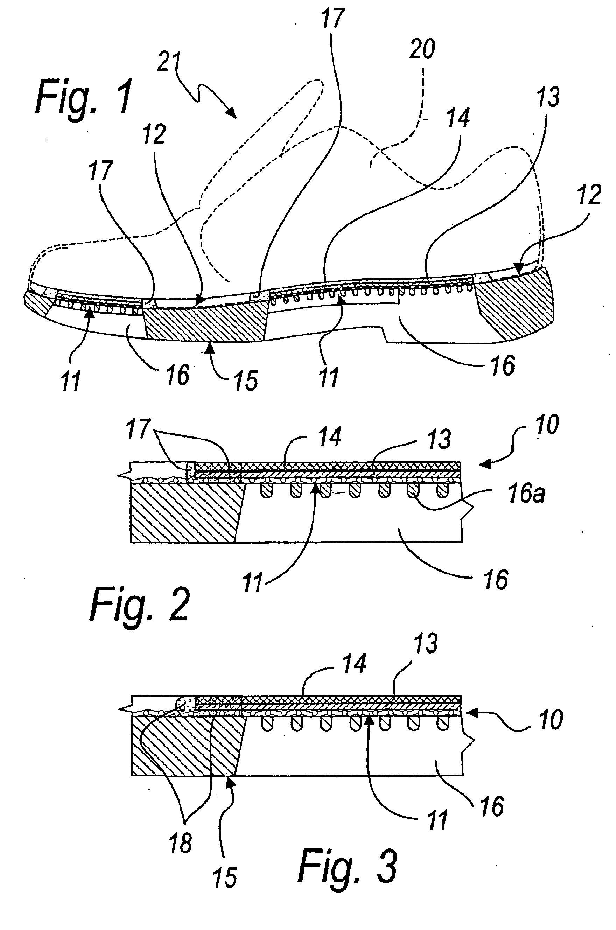

With reference to Figures 1 to 4, a waterproof and breathable sole for shoes has, in a first embodiment, a structure that comprises a supporting layer 10 which is made of net, felt or other diffusely perforated material in preset macroportions 11.

The supporting layer 10 constitutes, in this case, the assembly insole of the shoe.

The term "macroportion" is used to reference portions of area on the order of at least one square centimeter.

In the other portions 12, the supporting layer 10 can be constituted by a fine mesh of synthetic material, leather or other commonly used materials.

The structure also comprises a membrane 13, which is made of a material that is impermeable to water and permeable to water vapor (which is commonly commercially available and is made for example of expanded polytetrafluoroethylene), laminated onto a fine mesh 14 for supporting it, which lies above it, is made of synthetic material, and is arranged above the supporting layer 10 at at least the macroportions 11, which it covers.

The membrane 13 can be made of airtight material or of air-permeable material.

The membrane 13 can be coupled by means of spots of glue (not shown in the figures) to the supporting layer 10 in the regions of contact.

A tread 15 made of plastic material has through macroperforations 16 at the macroportions 11 and is joined hermetically to the membrane 13 and to the supporting layer 10 at least at the perimeters of the macroportions 11.

The through macroperforations 16 are crossed by cross-members 16a, which prevent transverse deformations of the assembly by acting as tension members in the deformations that occur as a consequence of use.

The coupling (Figures 1 and 2) can be provided for example by means of a perimetric layer 17 of adhesive, which is spread so as to penetrate, when the components are joined, through the meshes of the net and join monolithically the tread 15 and the membrane 13.

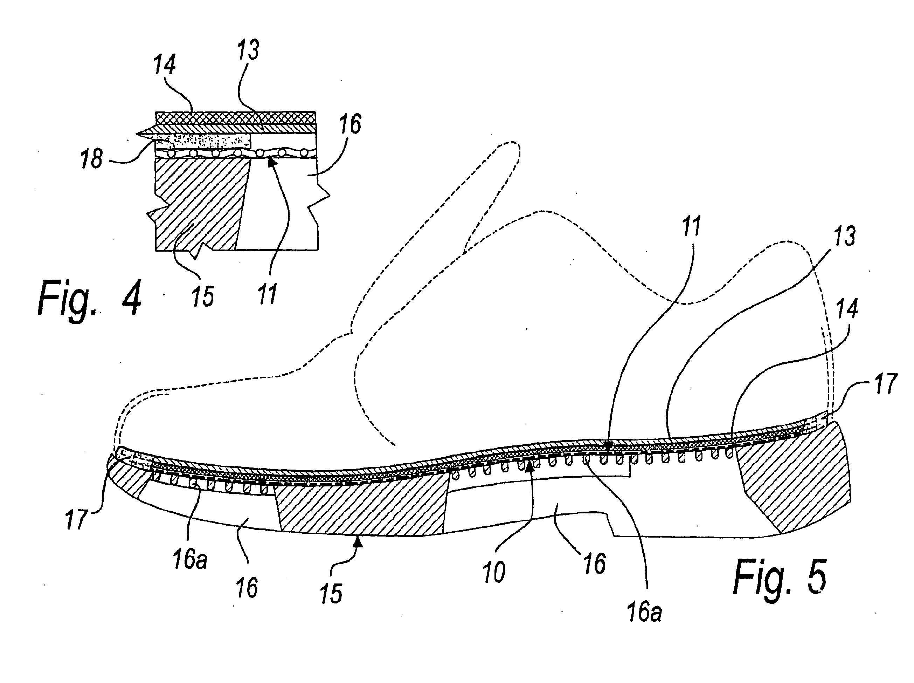

As an alternative (Figures 3 and 4), it is possible to arrange between the supporting layer 10 and the membrane 13, or between the tread 15 and the supporting layer 10, a film 18 made of PVC or PU and then perform a high-frequency welding between the tread 15 and the membrane 13 by melting the film 18, with penetration thereof between the meshes of the net so as to join the components monolithically.

As a further alternative, it is possible to perform high-frequency welding of the layer 10 and the membrane 13 to the film 18 and then glue the assembly to the tread 15.

An inner sole, not shown in the figures, made of breathable or diffusely perforated material, for supporting the foot, can be arranged above the supporting layer 10 and the membrane 13 with the fine mesh 14.

The described sole can be applied, in the commonly known ways, to an upper 20 of any kind so as to constitute a shoe 21.

With reference to Figure 5, in a slightly different embodiment it is possible to provide a single macroportion 11 that affects the entire sole of the foot without portions 12, regardless of the arrangement of the through macroperforations 16 of the tread 15.

In this case, the membrane 13 and its support 14 also affect the entire sole of the foot.

The glue 17 or the film 18 are arranged perimetrically.

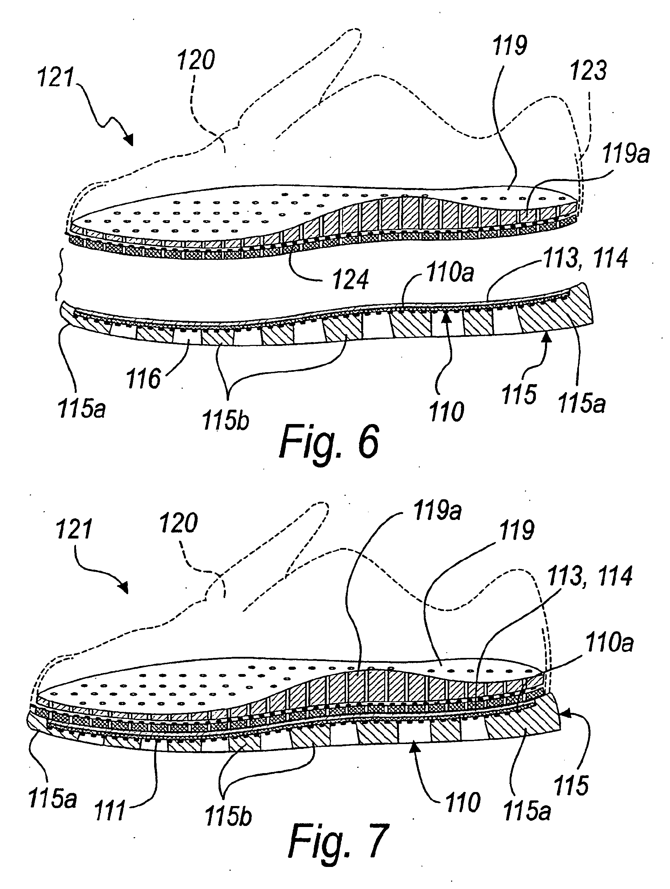

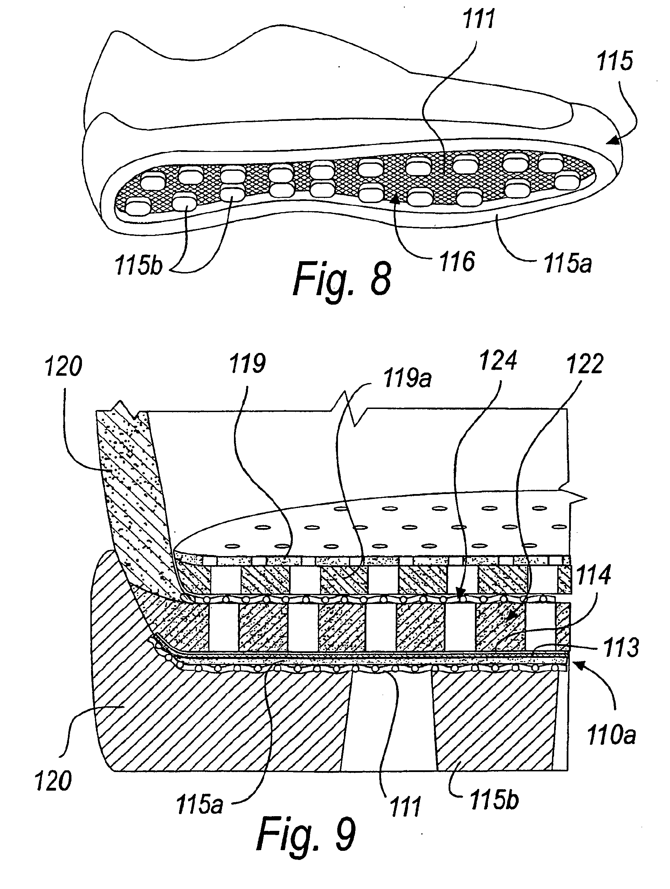

With reference now to Figures 6 to 9, a waterproof and breathable sole for shoes according to a second embodiment which does not form part of the invention has a structure that comprises a supporting layer 110 that is completely made of net, felt or other diffusely perforated material, which accordingly constitutes a single large macroportion 111.

The sole again comprises a membrane 13 made of a material that is impermeable to water and permeable to water vapor (commonly commercially available and made for example of expanded polytetrafluoroethylene), laminated together with a fine mesh 114 for supporting it which lies above it, is made of synthetic material and is arranged above the supporting layer 110, which it covers completely.

The membrane 113 can be made of airtight material or air-permeable material.

The membrane 113 is preferably coupled by means of spots of glue to the supporting layer 110.

It is possible to arrange a protective layer 110a, made for example of felt, below the membrane 113, for example if the supporting layer is made of net.

A tread 115 made of plastic material is assembled to the supporting layer 110 and is joined hermetically to the membrane 113 at least at the peripheral region of said membrane.

The coupling can be provided by directly injecting the tread 115 onto the supporting layer 110 in a mold, with at least perimetric penetration through the meshes of the net or of the felt that is appropriately reduced in thickness at its perimeter, is perforated perimetrically or bordered with net so as to reach the membrane 113.

The tread 115 is provided so as to form macroperforations 116, for example a single large through macroperforation 116 that affects substantially all the sole of the foot, except for the perimeter 115a, which is interrupted by protrusions 115b that form, together with the perimeter 115a, the surface for contact with the ground.

The coupling between the tread 115 and the supporting layer 110 can be obtained also in the manners described in the first embodiment, i.e., by gluing or high-frequency welding.

The sole can be coupled to an upper 120, so as to provide a shoe 121 that is assembled on an assembly insole 124 and is optionally coupled in a downward region to a filler layer 122 made of an expanded material such as diffusely perforated EVA, coconut fibers, etcetera.

The layer 122, when it is made of diffusely perforated EVA or the like (therefore inherently waterproof but rendered air-permeable), can be used as a means for the perimetric hermetic high-frequency welding from above of the membrane 113 to the upper 120.

The subsequent gluing of the tread 115 need not necessarily be hermetic.

The coupling between the sole and the upper 120 is in the peripheral region of said assembly insole and is provided for example by gluing or high-frequency welding.

An inner sole 119 made of breathable or diffusely perforated material can be arranged above the assembly insole 124.

The inner sole 119 can also be coupled in a downward region to a shock-absorbing layer 119a made of polyethylene or the like, which is diffusely perforated and anatomically contoured.

Other layers, not shown, such as cleaning insoles, absorbent layers et cetera, can be provided.

In practice it has been observed that the intended aim and objects of the present invention have been achieved.

A waterproof and breathable sole for shoes has in fact been provided whose structure is capable of utilizing to the fullest extent the breathability of the waterproof vapor-permeable membrane.

The structure allows to enlarge the area of the membrane until it affects substantially the entire sole of the foot.

The manufacture of the sole does not entail particular constructive complications with respect to conventional soles.

## Claims

1. A waterproof and breathable sole for shoes having a structure that comprises:
- a supporting layer (10) which, at least in a preset macroportion (11) having an area on the order of at least one square centimeter, is made of net, felt or other diffusely perforated material;
- a membrane (13) that is made of a material that is impermeable to water and permeable to water vapor and is associated above said supporting layer (10) at least in said at least one preset macroportion (11) made of net, felt or other diffusely perforated material, which it covers;
- a tread (15) made of plastic material, with at least one through macroperforation (16) being superimposed on said at least one preset macroportion (11) made of net, felt or other diffusely perforated material, wherein said at least one through macroperforation (16) exposes said supporting layer (10) to the outside of said tread (15) at said at least one preset macroportion (11) having said area on the order of at least one square centimeter, wherein said at least one macroperforation (16) is crossed by cross-members (16a);
said tread (15) being joined hermetically to said membrane (13) and to said supporting layer (10) at least at the perimeter of said at least one macroportion (11) made of net, felt or other diffusely perforated material.

2. The sole according claim 1, **characterized in that** said supporting layer (10), in the portions that are distinct with respect to said at least one preset macroportion (11) made of net, felt or other diffusely perforated material, is constituted by a fine mesh, leather or other similar materials.

3. The sole according to claim 1, **characterized in that** said membrane (13) made of waterproof and vapor-permeable material is laminated together with a fine mesh (14) for supporting it, which lies above it and is made of synthetic material.

4. The sole according to claim 1, **characterized in that** said membrane (13) is coupled by means of spots of glue to said supporting layer (10) in the contact regions.

5. The sole according to claim 1, **characterized in that** said supporting layer (10) is entirely made of mesh, felt or other diffusely perforated material that constitutes a single large macroportion (11) that is covered in an upward region by said membrane (13) and said tread (15) made of plastic material is assembled to said supporting layer (10) and joined hermetically to said membrane (13) at least at its peripheral region.

6. The sole according to one or more of the preceding claims, **characterized in that** said tread (15) is injected directly into a mold onto said supporting layer (10) with at least perimetric penetration through the meshes of said net or of the felt, which is perimetrically reduced in thickness, is perforated perimetrically or bordered with net, so as to reach and join hermetically said membrane (13).

7. The sole according to one or more of claims 1 to 5, **characterized in that** a perimetric layer (17) of glue is spread onto said supporting layer (10) so as to penetrate through the meshes of the net or the felt and join monolithically and hermetically the lower tread (15) and the upper membrane (13).

8. The sole according to one or more of claims 1 to 5, **characterized in that** a film (18) made of PVC or PU is arranged either between the supporting layer (10) and the membrane (13) or between the tread (15) and the supporting layer (10), with high-frequency welding performed so as the melt the film (18) and make it penetrate between the meshes of the net or felt, so as to join the components monolithically.

9. The sole according to one or more of claims 1 to 5, **characterized in that** a film (18) made of PVC or PU is arranged between said layer (10) and said membrane (13) by means of high-frequency welding and the assembly is then glued to said tread (15).

## Patentansprüche

1. Wasserdichte und atmungsaktive Sohle für Schuhe mit einer Struktur, umfassend:
- eine tragende Schicht (10), die zumindest in einem vordefinierten Makroabschnitt (11) mit einer Fläche in der Größenordnung von zumindest einem Quadratzentimeter aus Maschenwerk, Filz oder anderem großflächig perforierten Material besteht;
- eine Membran (13), die aus einem wasserundurchlässigen und wasserdampfdurchlässigem Material besteht und oberhalb der tragenden Schicht (10) zumindest in dem zumindest einen vordefinierten Makroabschnitt (11) aus Maschenwerk, Filz oder anderem großflächig perforiertem Material, die sie abdeckt, verbunden ist;
- eine Laufsohle (15) aus Kunststoffmaterial mit zumindest einer durchgängigen Makroperforation (16), die den zumindest einen vordefinierten Makroabschnitt (11) aus Maschenwerk, Filz oder anderem durchgängig perforierten Material überlagert, wobei die zumindest eine durchgängige Makroperforation (16) die tragenden Schicht (10) zur Auffenseite der Laufsohle (15) an dem zumindest einen vordefinierten Makroabschnitt (11) mit einer Fläche in der Größenordnung von zumindest einem Quadratzentimeter freilegt, wobei die zumindest eine Makroperforation (16) von Querelementen (16a) gequert wird;
wobei die Laufsohle (15) mit der Membran (13) und der tragenden Schicht (10) zumindest in einem Randbereich des zumindest einen Makroabschnitts (11) aus Maschenwerk, Filz oder anderem großflächig perforiertem Material hermetisch verbunden ist.

2. Sohle nach Anspruch 1, **dadurch gekennzeichnet, dass** die tragende Schicht (10) in den Abschnitten, die sich von dem zumindest einen vordefinierten Makroabschnitt (11) aus Maschenwerk, Filz oder anderem großflächig perforiertem Material unterscheiden, aus feinem Maschengewebe, Leder oder anderen ähnlichen Materialien zusammengesetzt ist.

3. Sohle nach Anspruch 1, **dadurch gekennzeichnet, dass** die Membran (13) aus wasserdichtem und wasserdampfdurchlässigem Material mit einem feinen Maschengewebe (14) zum Tragen desselben zusammenlaminiert ist, welches über ihr liegt und aus synthetischem Material besteht.

4. Sohle nach Anspruch 1, **dadurch gekennzeichnet, dass** die Membran (13) durch Klebstoffpunkte mit der tragenden Schicht (10) in den Kontaktbereichen gekoppelt ist.

5. Sohle nach Anspruch 1, **dadurch gekennzeichnet, dass** die tragende Schicht (10) vollständig aus Maschengewebe, Filz oder anderem großflächig perforiertem Material besteht, das einen einzigen großen Makroabschnitt (11) bildet, welcher in einem oberen Bereich durch die Membran (13) bedeckt ist und die Laufsohle (15) aus Kunststoffmaterial mit der tragenden Schicht (10) aufgebaut und mit der Membran (13) zumindest in ihrem Randbereich hermetisch verbunden ist.

6. Sohle nach einem oder mehreren der vorherigen Ansprüche, **dadurch gekennzeichnet, dass** die Laufsohle (15) direkt in eine Form auf die tragende Schicht (10) eingespritzt wird, wobei zumindest das Maschengewebe des Maschenwerks oder des Filzes perimetrisch perforiert werden, welche perimetrisch in der Dicke reduziert, perimetrisch perforiert oder durch Maschenwerk begrenzt ist, um die Membran (13) zu erreichen und sich hermetisch mit ihr zu verbinden.

7. Sohle nach einem oder mehreren der Ansprüche 1 bis 5, **dadurch gekennzeichnet, dass** eine perimetrische Lage (17) aus Klebstoff auf die tragende Schicht (10) verteilt wird, um das Gewebe des Maschenwerks oder des Filzes zu penetrieren und um die untere Laufsohle (15) und die obere Membran (13) monolithisch und hermetisch zu verbinden.

8. Sohle nach einem oder mehreren der Ansprüche 1 bis 5, **dadurch gekennzeichnet, dass** eine Folie (18) aus PVC oder PU entweder zwischen der tragenden Schicht (10) und der Membran (13) oder zwischen der Laufsohle (15) und der tragenden Schicht (10) angeordnet ist, wobei Hochfrequenz-Verschweißen durchgeführt wird, um die Folie (18) zu schmelzen und in das Maschengewebe des Maschenwerks oder Filzes eindringen zu lassen, um die Komponenten monolithisch zu verbinden.

9. Sohle nach einem oder mehreren der Ansprüche 1 bis 5, **dadurch gekennzeichnet, dass** eine Folie (18) aus PVC oder PU zwischen der Schicht (10) und der Membran (13) durch Hochfrequenz-Verschweißen angeordnet wird und der Verbund sodann mit der Laufsohle (15) verklebt wird.

## Revendications

1. Semelle imperméable à l'eau et perméable à l'air pour chaussures ayant une structure qui comprend :
une couche de support (10) qui, au moins dans une macropartie prédéterminée (11) ayant une surface de l'ordre d'au moins un centimètre carré, est réalisée avec un filet, du feutre ou un autre matériau perforé de manière diffuse ;
une membrane (13) qui est réalisée avec un matériau qui est imperméable à l'eau et perméable à la vapeur d'eau et est associée au-dessus de ladite couche de support (10) au moins dans ladite au moins une macropartie prédéterminée (11) réalisée avec un filet, du feutre ou un autre matériau perforé de manière diffuse, qu'elle recouvre ;
une semelle extérieure (15) réalisée à partir de matière plastique, avec au moins une macroperforation traversante (16) qui est superposée sur ladite au moins une macropartie prédéterminée (11) réalisée avec un filet, du feutre ou un autre matériau perforé de manière diffuse, dans laquelle ladite au moins une macroperforation traversante (16) expose ladite couche de support (10) à l'extérieur de ladite semelle extérieure (15) au niveau de ladite au moins une macraperforation prédéterminée (11) ayant ladite surface de l'ordre d'au moins un centimètre carré, dans laquelle ladite au moins une macroperforation (16) est traversée par des éléments transversaux (16a) ;
ladite semelle extérieure (15) étant assemblée hermétiquement à ladite membrane (13) et à ladite couche de support (10) au moins au niveau du périmètre de ladite au moins une macroperforation (11) réalisée avec un filet, du feutre ou un autre matériau perforé de manière diffuse.

2. Semelle selon la revendication 1, **caractérisée en ce que** ladite couche de support (10), dans les parties qui sont distinctes par rapport à ladite au moins une macropartie prédéterminée (11) réalisée avec un filet, du feutre ou un autre matériau perforé de manière diffuse, est constituée par une fine maille, du cuir ou d'autres matériaux similaires.

3. Semelle selon la revendication 1, **caractérisée en ce que** ladite membrane (13) réalisée avec un matériau imperméable à l'eau et perméable à la vapeur, est déposée en couche conjointement avec une fine maille (14) pour la supporter, qui se trouve au-dessus de celle-ci et est réalisée avec un matériau synthétique.

4. Semelle selon la revendication 1, **caractérisée en ce que** ladite membrane (13) est couplée au moyen de points de colle à ladite couche de support (10) dans les régions de contact.

5. Semelle selon la revendication 1, **caractérisée en ce que** ladite couche de support (10) est entièrement réalisée à partir de maille, de feutre ou d'un autre matériau perforé de manière diffuse qui constitue une seule grande macropartie (11) qui est recouverte dans une région ascendante par ladite membrane (13) et ladite semelle extérieure (15) réalisée avec une matière plastique est assemblée à ladite couche de support (10) et hermétiquement assemblée à ladite membrane (13) au niveau de sa région périphérique.

6. Semelle selon une ou plusieurs des revendications précédentes, **caractérisée en ce que** ladite semelle extérieure (15) est injectée directement dans un moule sur ladite couche de support (10) avec au moins une pénétration périmétrale à travers les mailles dudit filet ou du feutre, qui est réduite de manière périmétrale du point de vue de l'épaisseur, est perforée de manière périmétrale ou bordée avec un filet, afin d'atteindre et d'assembler hermétiquement ladite membrane (13).

7. Semelle selon une ou plusieurs des revendications 1 à 5, **caractérisée en ce qu'**une couche périmétrale (17) de colle est étalée sur ladite couche de support (10) afin de pénétrer à travers les mailles du filet ou du feutre et assembler de manière monolithique et hermétique la semelle extérieure inférieure (15) et la membrane supérieure (13).

8. Semelle selon une ou plusieurs des revendications 1 à 5, **caractérisée en ce qu'**un film (18) en PVC ou PU est agencé entre la couche de support (10) et la membrane (13) ou entre la semelle extérieure (15) et la couche de support (10), par un soudage à haute fréquence réalisé pour faire fondre le film (18) et lui permettre de pénétrer entre les mailles du filet ou du feutre, afin d'assembler les composants de manière monolithique.

9. Semelle selon une ou plusieurs des revendications 1 à 5, **caractérisée en ce qu'**un film (18) en PVC ou PU est agencé entre ladite couche (10) et ladite membrane (13) au moyen du soudage à haute fréquence et l'ensemble est ensuite collé à ladite semelle extérieure (15).
